# EUROPÄISCHE PATENTANMELDUNG

(11) **EP 2 363 303 A1**
(43) Veröffentlichungstag der Anmeldung: **07.09.2011**
(21) Anmeldenummer: 10154132.4
(22) Anmeldetag: 19.02.2010
(51) Int. Cl.: B60C 1/00, C08F 4/52, C08F 36/06

(54) **Bimodales NdBR**

(71) Anmelder: LANXESS Deutschland GmbH, 51369 Leverkusen (DE)
(72) Erfinder: Kloppenburg, Heike, Dr., 40625 Düsseldorf (DE); Groß, Thomas, Dr., 42489 Wülfrath (DE)

(57) **Zusammenfassung**

Die Erfindung betrifft ein hochmolekulares, bimodales Neodym-katalysiertes Polybutadien mit einem hohen Anteil an cis-1,4-Einheiten von > 95 % und einem geringen Anteil an 1,2-Vinyl-Gehalt von < 1 %, wobei das Polybutadien eine lineare polymere Hauptfraktion und eine langkettenverzweigte Polymerfraktion aufweist, wobei die polymere Hauptfraktion einen Anstieg von > 0,5 und die langkettenverzweigte Polymerfraktion einen Anstieg von < 0,3 in der RGM-Beziehung aufweist.

## Beschreibung

Die vorliegende Erfindung betrifft hochmolekulares, bimodales, Neodym-katalysiertes Polybutadien mit einem hohen Anteil an cis-1,4-Einheiten von > 95 % und einem geringen Anteil an Vinyl-Einheiten von < 1 %, deren Herstellungsverfahren und Verwendung.

Polybutadiene werden als wichtige Bestandteile von Kautschukmischungen in der Reifenindustrie eingesetzt, wobei eine Verbesserung der Endeigenschaften, wie etwa eine Reduktion des Rollwiderstandes und des Abriebes gewünscht wird. Ein weiteres Anwendungsfeld sind Golfballkerne oder Schuhsohlen, wobei hier eine hohe Rückprallelastizität im Vordergrund steht.

Polybutadiene mit einem hohen Anteil an cis-1,4-Einheiten werden seit längerer Zeit in großem technischen Maßstab produziert und für die Herstellung von Reifen und anderen Gummiwaren sowie zur Schlagzähmodifizierung von Polystyrol eingesetzt.

Zur Erzielung hoher Anteile an cis-1,4-Einheiten werden derzeit fast ausschließlich Katalysatoren auf Basis von Verbindungen der Seltenen Erden eingesetzt, und werden beispielsweise in EP-A1 0 011 184 und EP-B-A1 0 007 027 beschrieben.

Aus dem Stand der Technik ist bekannt, dass speziell Neodym-katalysierte Polybutadiene in der Gruppe der hoch-cis-Polybutadiene besonders vorteilhafte Eigenschaften hinsichtlich Rollwiderstand, Abrieb und Rückprallelastizität aufweisen.

Dem Fachmann ist bekannt, dass zur Herstellung von Polybutadienen strukturell definierte single site Katalysatoren auf Basis von Allyl-Komplexen der Seltenen Erden eingesetzt werden, wie sie beispielsweise in Macromolecular Chemistry and Physics, 2002 (203/7) 1029-1039 beschrieben sind.

Bei der Herstellung von Polybutadienen spielen die eingesetzten Katalysatorsysteme eine wichtige Rolle.

Der technisch eingesetzte Neodymkatalysator beispielsweise ist ein Ziegler/Natta-System, das aus mehreren Katalysatorkomponenten gebildet wird. Bei der Katalysatorbildung werden meist unterschiedliche Katalysatorzentren gebildet, die sich im Polymer anhand einer mindestens bimodalen Molmassenverteilung erkennen lassen. Im Ziegler/Natta-Katalysatorsystem werden die bekannten 3 Katalysatorkomponenten, meist bestehend aus einer Neodymquelle, einer Chloridquelle und einer Aluminiumorganischen Verbindung in verschiedenster Art und Weise unter bestimmten Temperaturbedingungen vermischt, wobei das Katalysatorsystem mit oder ohne Alterung für die Polymerisation vorbereitet wird.

Aus dem Stand der Technik sind mehrere Herstellungsverfahren für Ziegler/Natta-Katalysatorsysteme bekannt, welche zur Herstellung von Polybutadienen eingesetzt werden.

EP 0 375 421 B1 beschreibt ein Verfahren zur Herstellung eines Katalysators für die Polymerisierung von Butadien, wobei Aluminiumkohlenwasserstoff oder Aliminiumkohlenwasserstoffhydrid, Neodymneodecanoat oder Neodymnaphthenat und eine Halogenquelle in einer Kohlenwasserstofflösung (Hexan) bei einer Temperatur von -15°C bis -60°C vermischt werden, wobei das Katalysatorsystem für eine Dauer von mindestens 8 Stunden gealtert wird, bevor es für die Polymerisation verwendet wird. Die Alterung wird bei vorzugsweise -20°C durchgeführt.

Die Anzahl der Kettenenden im Polymer ist für die Energiedissipation verantwortlich. Je höher die Anzahl an freien Kettenenden, desto höher ist die Energiedissipation durch das Polymer. Je geringer jedoch die Energiedissipation des Polymers ist, desto geringer ist beispielsweise der Rollwiderstand und desto besser ist die Rückprallelastizität des Polymers. Dementsprechend sind die Endeigenschaften eines linearen Polymers mit nur 2 Kettenenden pro Molekül immer besser als die eines verzweigten Polymers bei gleicher Molmasse.

Aus dem Stand der Technik sind auch CoBR und NiBR bekannt; diese sind statistisch stärker verzweigt als die linearen NdBR-Polymere, wie beispielweise beschrieben in Tire Technology International (2009), 82-86 und Journal of Macromolecular Science, Pure and Applied Chemistry (2004), A41(3), 245-256.

Die Vorteile des linearen NdBR liegen insbesondere in den verbesserten dynamischen Eigenschaften und einer geringeren Energieaufnahme, die unter anderem in Reifenanwendungen zu einem geringeren Rollwiderstand und in Golfballanwendungen zu verbesserter Rückprallelastizität führen. In US 6,706,814 B2 wird beschrieben, dass durch die Verwendung von linearen Polybutadienen beispielsweise in HIPS Formkörpern (schlagzäh modifiziertes Polystyrol) die Schlagzähigkeit verbessert wird.

Auf der anderen Seite ist jedoch bekannt, dass lineare Kautschuke hohe Lösungsviskositäten haben, wobei die hohen Lösungsviskositäten zwangsweise auch zu hohen Prozessviskositäten beim ABS-oder HIPS-Prozess führen. Weiterhin ist bekannt, dass die Lösezeit vom Verzweigungsgrad abhängt, wobei lineare Polymer deutlich langsamer löslich sind als verzweigte Polymere. Durch die höheren Prozessviskositäten und die längeren Lösezeit ist die Wirtschaftlichkeit beim Einsatz von linearen Polybutadienen stark reduziert.

Es ist des Weiteren bekannt, dass die Verzweigungen für die Verarbeitbarkeit des Polymers besonders wichtig sind. Beim Einsatz von verzweigten Polymeren für ABS oder HIPS verbessern verzweigte Polymere die Lösungseigenschaften und reduzieren die Lösezeit. Die Molmasse und der Verzweigungsgrad des Polymers bestimmen die Lösungsviskosität.

NdBR-Polymere und Neodym-katalysiertes Polybutadiene werden als Synonyme verstanden.

Es ist daher wünschenswert, ein Neodym-katalysiertes Polybutadien bereitzustellen, das die vorteilhaften Eigenschaften der Linearität hinsichtlich der dynamischen Eigenschaften als auch die vorteilhaften Eigenschaften der Verzweigung hinsichtlich der Verarbeitbarkeit aufweist.

Polybutadien und Polymer werden als Synonyme verwendet.

Zur Lösung der Aufgabe wird Polybutadien der eingangs genannten Art vorgeschlagen, welches eine lineare polymere Hauptfraktion und eine langkettenverzweigte Polymerfraktion, wobei die polymere Hauptfraktion einen Anstieg von > 0,5 und die langkettenverzweigte Polymerfraktion einen Anstieg von < 0,3 in der RGM-Beziehung aufweist.

Die Fraktionen werden mittels der asymmetrischen Fluss-Feld-Fluss-Fraktionierung (AF4) eluiert.

Vorzugsweise handelt es sich hierbei um Polybutadiene, die durch neodymhaltige Katalysatoren-Systeme katalysiert wurden. Derartige Systeme sind Ziegler-Natta-Katalysatoren auf Basis von Neodymverbindungen, die in Kohlenwasserstoffen löslich sind.

Als Neodymverbindung werden besonders bevorzugt Neodymcarboxylate oder Neodymalkoholate, insbesondere Neodymneodecanoat, Neodymoctanoat, Neodymnaphthenat, Neodym-2,2-diethyl-hexanoat und/oder Neodym-2,2-diethyl-heptanoat eingesetzt.

Überraschend konnte festgestellt werden, dass das erfindungsgemäße Polybutadien eine Linerarität und eine Verzweigung aufweist und somit eine Kombination beider Eigenschaften besitzt.

In der Vergangenheit stand für die Charakterisierung der Kettenstruktur von Polybutadien sowie zur Ermittlung der Molekulargewichtsverteilung und deren Kennwerte nur die Größenausschlusschromatographie (GPC), gekoppelt mit der Lichtstreu- oder Viskositätsdetektion zur Verfügung. Es hat sich herausgestellt, dass mit dieser Methode das erfindungsgemäße NdBR nicht zufriedenstellend charakterisiert werden konnte.

Es wurde daher die asymmetrische Fluss-Feld-Fluss-Fraktionierung (AF4) eingesetzt, die hervorragend für die Charakterisierung geeignet ist. Hierbei erfolgt die Separation in einem leeren Kanal ohne stationäre Phase. Somit kann nahezu scher und wechselwirkungsfrei separiert werden.

Struktur-Eigenschaftsbeziehungen ermöglichen eine Beschreibung des Zusammenhangs zwischen molekularen Parametern und den Eigenschaften dieser Polymere.

Die RGM-Beziehung stellt einen Zusammenhang zwischen dem Trägheitsradius (RMS) und der Molmasse M des Makromoleküls her und wird im doppelt logarithmischen Plot als Anstieg des Trägheitsradius über der Molmasse ausgewertet.

Der Trägheitsradius (RMS) wird durch die Lichtstreuung bestimmt, wobei das eingestrahlte Licht am Polymerknäuel gestreut wird. Aus der Winkelabhängigkeit des Streusignals wird das hydrodynamischen Volumen bzw. der Trägheitsradius des Polymeren ermittelt.

Bei linearen Polymeren steigt der Trägheitsradius proportional zur Molmasse an. Wie unter anderem in Journal of Applied Polymer Science, 54 (1994) 91-103 beschrieben, haben lineare Polymere in der RGM-Beziehung einen Anstieg von 0,5 bis 0,6. Bei gleicher Molmasse erhöht sich mit der zunehmenden Verzweigung im Polymeren die Dichte im Polmyerknäuel und der Trägheitsradius nimmt ab. Je höher der Verzweigungsgrad des Polymeren, desto niedriger ist der Anstieg in der RGM-Beziehung. Verzweigte Polymere werden mit einem Anstieg der RGM-Beziehung von kleiner als 0,5 beschrieben, wobei ein Anstieg von 0,33 und kleiner auf stark verzweigte Polymere mit kugelförmiger Geometrie hinweist.

Zur Bestimmung dieser Parameter wurden im Verlauf der Untersuchung gekoppelte Anlagen, bestehend aus einer Fraktioniereinheit - der asymmetrischen Fluss-Feld-Fluss-Fraktionierung - mit vielwinkligen Streuphotometern und Konzentrationsdetektoren eingesetzt.

Beschreibung der Analyse mittels AF4:
Vor der Analyse wurden die Polymere in HPLC-reinem THF gelöst. Die Konzentration beträgt 3 mg/ml. Zur Stabilisierung wurde jeweils 1 mg/ml BHT zugesetzt. Die Lösezeit betrug 16 Stunden bei Raumtemperatur, danach 4 Stunden im Ofen bei 50 °C und anschliessend 48 Stunden bei Raumtemperatur. Vor und nach der Wärmebehandlung wurde die Polymerlösung durch leichtes Schütteln mit der Hand bewegt, sonst fand keinerlei mechanische Homogenisierung statt. Um die hochmolekularen Polymerpartikel nicht zu entfernen, wurde auf eine Filtration verzichtet. Der AF4-Kanal war mit einer Celluloseregeneratmembran (Cut-Off-Vorgabe 10 kg/mol PS) ausgestattet.

Die Molekulargewichte und Konzentrationen wurden mit einem Brechungsindexinkrement von 0,137 ml/mg für Polybutadien berechnet. Alle Messungen wurden mit dem Pumpen-System der AF4 2000 Anlage von Postnova Analytics (Landsberg/Lech, Deutschland) realisiert. Als Detektorkombination wird ein MALLS-Detektor der Firma Dawn DSP, Wyatt Technology (Santa Babara, USA) und ein RI-Detektor des Typs PN 3140 der Firma Postnova Analytics (Landsberg/Lech, Deutschland) eingesetzt.

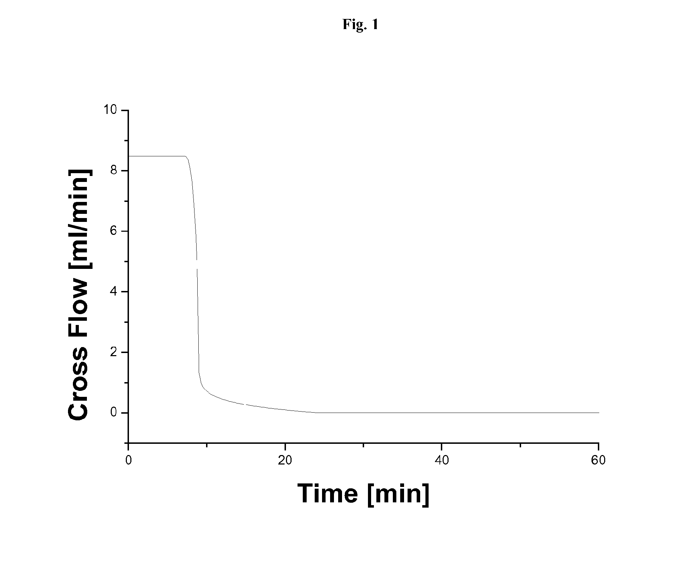

Abb. 1 zeigt eine Funktion des verwendeten Querflussgradieten bei der AF4 Analyse:
Das Injektionsvolumen bei der AF4 Analyse betrug 100 µl. Nach der Injektionsphase wurde die Probe mit einer Flussrate von 0,2 ml/min in den Kanal befördert, um einem eventuellen Abbau der Moleküle in der relativ hoch konzentrierten Lösung vorzubeugen. Während dieser Prozedur bleibt der Querfluss konstant bei seinem Maximalwert. Ein zweiter Fluss, der sog. Focus, ist während der Injektionsprozedur ebenfalls aktiv. Dieser Fluss sorgt für einen konstanten Detektordurchfluss von 0,5 ml/min und ermöglicht die Fixierung der injizierten Probe in einer sehr engen Zone (verringert die spätere Bandenverbreiterung). Nach der Injektionsphase von 4 Minuten wird der Fokus innerhalb von 1 Minute exponentiell auf 0 abgesenkt und das Querflussprogramm schließt sich an.
Dabei kann festgestellt werden, dass die erfindungsgemäßen Polymere aus zwei Fraktionen bestehen, wobei die lineare Hauptfraktion einen Anstieg > 0,5 und die langkettenverzweigte Polymerfraktion einen Anstieg von < 0,3 der RGM-Beziehung aufweisen.

Durch die hohe Verzweigung der langkettenverzweigten Polymerfraktion reduziert sich der maximale Trägheitsradius der gelösten Polymere, so dass der Anteil an Polymeren mit einem Trägheitsradius von über 100 nm < 15 % beträgt, bevorzugt < 10%, besonders bevorzugt < 5%.

Die Breite der Trägheits-Radienverteilung ist sehr eng und liegt bei < 45 nm, bevorzugt < 40 nm, besonders bevorzugt < 35 nm.

Die Breite Trägheits-Radienverteilung wird anhand der differentiellen Auftragung bestimmt. Der maximale differentielle Wert der Radienverteilung wird halbiert und die Breite der Trägheits-Radienverteilung ergibt sich als Differenz aus den beiden Radienwerte der Kurve bei diesen Zahlenwerten.

Vorzugsweise weist das erfindungsgemäße Polybutadien eine langkettenverzweigte Polymerfraktion mit Polymeren > 1 Mio g/mol auf

Vorzugsweise ist die lineae polymere Hauptfraktion größer als die langkettenverzweigte Polymerfraktion.

Zur Herstellung des erfindungsgemäßen Polybutadiens wird ein Verfahren bereitgestellt, welches folgende Verfahrensschritte aufweist:
1. Modifizierte Katalysatorenherstellung mit Präformierung unter der Verwendung von Katalysatorsysteme basierend auf Neodym bestehend aus
   - Komponente A:: einem Alkoholat, einem Phoshponat, Phosphinate und/oder Phosphate, einem Carboxylat, einer Komplexverbindung der Seltenen Erdmetalle mit Diketonen und/oder einer Additionsverbindung der Halogenide der Seltenen Erdmetalle mit einer Sauerstoff- oder Stickstoff-Donatorverbindung, vorzugsweise Neodymversatat,
   - Komponente B:: einem Dialkylaluminiumhydrid, vorzugsweise Diisobutylaluminiumhydrid (DIBAH),

   - Komponente C:: einem Dien, vorzugsweise Butadien oder Isopren und
   - Komponente D:: und wenigstens einer Organometallhalognide, vorzugsweise Ethylaluminiumsesquichlorid (EASC),
   wobei zunächst in einem ersten Schritt die Komponenten A, B, und C und bei einer Temperatur von -20°C bis 80°C, bevorzugt von 0°C bis 40°C für einen Zeitraum von 5 Minuten bis 10 Stunden, bevorzugt von 10 Minuten bis 2 Stunden vermischt und die Mischung dann vor der Zugabe von Komponente D auf kleiner -10°C, bevorzugt auf kleiner -30°C abgekühlt wird;
2. optional Präformierung des modifizierten Katalysatorsystems bei einer Temperatur von - 30°C bis 80 C, bevorzugt von 5°C bis 50°C für die Dauer von 10 Minuten bis 250 Stunden, vorzugsweise von 20 Minuten bis 100 Stunden;
3. Polymerisation der Monomere bei einer Temperatur zwischen -20 und 100°C,
4. anschließend wird die Polymerisationslösung gegen Ende, nämlich bei einem Umsatz von
   ≥ 85 %, bevorzugt ≥ 90 % und besonders bevorzugt ≥ 95 % Butadien, bei einer Temperatur von ≥ 100°C, bevorzugt 100°C bis 140°C, besonders bevorzugt 100°C bis 125°C für 10 bis 120 Min, bevorzugt für 15 bis 60 min gehalten.

Durch die erfindungsgemäße Verfahrensführung konnte ein Katalysatorsystem basierend auf Neodym gebildet werden, welches eine optimale Aktivität aufweist und zu dem gewünschten oben genannten Polymer führt. Es ist ein Zusammenspiel der Menge und Wirkungsweise der Katalysatorbestandteile, welche die Endeigenschaften des Polymers und auch die Wirtschaftlichkeit des Herstellungsverfahrens bestimmt.

Vorzugsweise ist Komponente C das gleiche Monomer, welches zur Herstellung von hochmolekularen, Neodym-katalysierten Polybutadienen verwendet wird. Die Gegenwart des Diens bei der Katalysatorenherstellung ist besonders wichtig, da somit ein stabiler Katalysatorkomplex gebildet werden kann. Als Lösungsmittel kommt Hexan, Cyclohexan, Toluol oder ein Lösungsmittelgemisch der C6-Fraktion in Frage. Andere Lösungsmittel sind ebenso denkbar.

Das Lösungsmittel kann in reiner Form oder als Lösungsmittel der einzelnen Katalysatorkomponenten zugegeben werden. Die Menge des Lösungsmittels richtet sich nach der Komponente A, wobei die Konzentration der Komponente A zum Lösungsmittel zwischen 0,05 und 0,3 mol/L, bevorzugt zwischen 0,08 und 0,2 mol/L liegt.

Das Molverhältnis der Komponente A zur Komponente B beträgt 1:1 bis 1:100, bevorzugt 1:3 bis 1:80 und besonders bevorzugt 1:3 bis 1:50. Das Molverhältnis der Komponente A zur Komponente C beträgt 1:1 bis 1:200, bevorzugt 1:2 bis 1:100 und besonders bevorzugt 1:3 bis 1:50. Das Molverhältnis der Komponente A zur Komponente D beträgt 1:0,5 bis 1:20, bevorzugt 1:0,7 bis 1:10 und besonders bevorzugt 1:0,8 bis 1:8.

Die Abkühlungstemperatur im Schritt 1 der modifizierten Katalysatorenherstellung beträgt vorzugsweise -10 °C oder- 20 °C, bevorzugt -30 °C, besonders bevorzugt - 60°C.

Des Weiteren ist es möglich, ein Aluminiumtrialkyl, vorzugsweise Tributylaluminium (TIBA) für die Katalysatorensystemherstellung einzusetzen. Das Molverhältnis der Komponente A zu Aluminiumtrialkyl, vorzugsweise Tributylaluminium (TIBA) beträgt 1:0,4 bis 1:15, bevorzugt 1:0,5 bis 1:8.

Nachdem das Katalysatorsystem präformiert wurde, falls die Präformierung gewünscht, wird die Polymerisation in organischen Lösungsmitteln ausgeführt. Diese Lösungsmittel müssen inert gegenüber dem verwendeten Katalysatorsystem sein. Geeignet sind z.B. aromatische, aliphatische und cycloaliphatische Kohlenwasserstoffe wie Benzol, Toluol, Pentan, n-Hexan, iso-Hexan, Heptan und Cyclohexan.

Die Polymerisation kann sowohl kontinuierlich als auch diskontinuierlich durchgeführt werden.

Die Polymerisation wird bei einer Temperatur zwischen -20 und 100°C durchgeführt. In einer üblichen Ausführungsform wird der Katalysator bestehend aus den Komponenten A, B, C, und D ggf. TIBA einer Mischung von 100 Gew.-Teilen Lösungsmittel mit 5 bis 50 Gew.-Teilen, bevorzugt 8 bis 30 Gew.-Teilen Monomer zugesetzt.

Die gegen Ende der Polymerisation gehaltene Zeit wird hier auch Standzeit genannt.

Durch die Standzeit bei geeigneter Temperatur wird die Verzweigungsreaktion bei Polymeren über 1 Mio g/mol gewährleistet.

Vorzugsweise beträgt die Temperatur gegen Ende der Polymerisation, also während der Standzeit 100 bis 140°C, bevorzugt 100 bis 120°C.

Nach Beendigung der Standzeit wird der Katalysator durch Zusatz geringer Mengen beispielsweise an Wasser, Carbonsäuren oder Alkoholen deaktiviert.

Polymerlösung und Polymerisationslösung werden als Synonyme verstanden.

Der Polymerlösung können vor der Aufarbeitung übliche Stabilisatoren in üblichen Mengen zugesetzt werden. Als Stabilisatoren werden z.B. sterisch gehinderte Phenole oder aromatische Amine oder Phosphite wie z.B. 2,6-Di-tert.Butyl-4,5-methyl-phenol verwendet.

Die Isolierung der Polymeren erfolgt durch Eindampfen der Polymerlösung, durch Fällen mit einem Nichtlösungsmittel wie beispielsweise Methanol, Ethanol, Aceton oder bevorzugt durch Wasserdampfdestillation des Lösungsmittels.

Nach dem Strippen mit Wasserdampf erfolgt die Wasserentfernung mit geeigneten Sieb- oder Schneckenaggregaten wie Expeller- bzw. Expander-Schnecken oder Fließbetttrockner.

Die Trocknung erfolgt nach den üblichen Verfahren, z.B. im Trockenschrank oder in einem Schneckentrockner.

Weiterhin können die erfindungsgemäßen Polybutadiene alleine, im Verschnitt mit aromatischen oder aliphatischen Ölen oder im Gemisch mit anderen Kautschuken zur Herstellung von Kautschukmischungen und Kautschukvulkanisaten verwendet werden, wie sie beispielsweise in der Reifenindustrie oder zur Herstellung von Schuhsohlen oder technischen Gummiwaren verwendet werden. Für die Herstellung von Kautschukvulkanisaten eignen sich als zusätzliche Kautschuke neben Naturkautschuk auch Synthesekautschuke. Bevorzugte Synthesekautschuke sind beispielsweise bei W. Hofmann, Kautschuktechnologie, Gentner Verlag, Stuttgart 1980 und I. Franta, Elastomers and Rubber Compounding Materials, Elsevier, Amsterdam 1989 beschrieben. Sie umfassen u.a.
- BR: - herkömmliches Polybutadien
- ABR: - Butadien/Acrylsäure-C1-C4-alkylester-Copolymere
- CR: Polychloropren
- IR: Polyisopren
- SBR: Styrol/Butadien-Copolymerisate mit Styrolgehalten von 1 bis 60, vorzugsweise 20 bis 50 Gew.-%
- IIR: Isobutylen/Isopren-Copolymerisate
- NBR: Butadien/Acrylnitril-Copolmere mit Acrylnitrilgehalten von 5 bis 60, vorzugsweise 10 bis 40 Gew.-%
- HNBR: teilhydrierter oder vollständig hydrierter NBR-Kautschuk

- EPDM: Ethylen/Propylen/Dien-Copolymerisate

sowie Mischungen dieser Kautschuke. Für die Herstellung von Kfz-Reifen mit Hilfe der oberflächenmodifizierten Füllstoffe sind insbesondere Naturkautschuk, Emulsions-SBR sowie Lösungs-SBR-Kautschuke mit einer Glastemperatur oberhalb von -50°C, die gegebenenfalls mit Silylethern oder anderen funktionellen Gruppen, modifiziert sein können, wie in der EP-A-0 447 066 beschrieben, Polybutadienkautschuk mit hohem 1.4-cis-Gehalt (>90 %), der mit Katalysatoren auf Basis Ni, Co, Ti oder Nd hergestellt wird, sowie Polybutadienkautschuk mit einem Vinylgehalt von 0 bis 75 % sowie deren Mischungen von Interesse.

Die Kautschukmischungen enthaltend das erfindungsgemäße Polybutadien stellen einen weiteren Gegenstand der Erfindung dar und enthalten in der Regel 5 bis 300 Gew.-Teile eines aktiven oder inaktiven Füllstoffs, wie z.B.
- hochdisperse Kieselsäuren, hergestellt z.B. durch Fällung von Lösungen von Silikaten oder Flammenhydrolyse von Siliciumhalogeniden mit spezifischen Oberflächen von 5 bis 1000, vorzugsweise 20 bis 400 m2/g (BET-Oberfläche) und mit Primärteilchengrößen von 10 bis 400 nm. Die Kieselsäuren können gegebenenfalls auch als Mischoxide mit anderen Metalloxiden, wie Al-, Mg-, Ca-, Ba-, Zn-, Zr-, Ti-oxiden vorliegen,
- synthetische Silikate, wie Aluminiumsilikat, Erdalkalisilikat wie Magnesiumsilikat oder Calciumsilikat, mit BET-Oberflächen von 20 bis 400 m2/g und Primärteilchendurchmessern von 10 bis 400 nm,
- natürliche Silikate, wie Kaolin und andere natürlich vorkommende Kieselsäure,
- Glasfasern und Glasfaserprodukte (Matten, Stränge) oder Mikroglaskugeln,
- Metalloxide, wie Zinkoxid, Calciumoxid, Magnesiumoxid, Aluminiumoxid,
- Metallcarbonate, wie Magnesiumcarbonat, Calciumcarbonat, Zinkcarbonat,
- Metallhydroxide, wie z.B. Aluminiumhydroxid, Magnesiumhydroxid,
- Metallsalze, wie z.B. Zink- oder Magnesiumsalze von [alpha],[beta]-ungesättigten Fettsäuren, wie z.B. Acryl- oder Methacrylsäure mit 3 bis 8 Kohlenstoffatomen, wie Zinkacrylat, Zinkdiacrylat, Zinkmethacrylat, Zinkdimethacrylat und Mischungen davon;
- Ruße. Die hierbei zu verwendenden Ruße sind nach dem Flammruß, Furnace- oder Gasrußverfahren hergestellt und besitzen BET-Oberflächen von 20 bis 200 m2/g, wie z.B. SAF-, ISAF-, HAF-, FEF- oder GPF-Ruße.
- Kautschukgele, insbesondere solche auf Basis Polybutadien, Butadien/Styrol-Copolymere, Butadien/Acrylnitril-Copolymere und Polychloropren.

Besonders bevorzugt werden Zinkdiacrylate, hochdisperse Kieselsäuren und Ruße.

Die genannten Füllstoffe können alleine oder im Gemisch eingesetzt werden. In einer besonders bevorzugten Ausführungsform enthalten die Kautschukmischungen als Füllstoffe ein Gemisch aus hellen Füllstoffen, wie hochdispersen Kieselsäuren, und Rußen, wobei das Mischungsverhältnis von hellen Füllstoffen zu Rußen bei 0,05 bis 20, bevorzugt 0,1 bis 10 liegt.

Die Füllstoffe werden bevorzugt als Feststoffe oder als Aufschlämmung in Wasser oder einem Lösungsmittel zur Lösung des/der erfindungsgemäßen Polybutadiene hinzugegeben. Die Kautschuklösung kann vorher hergestellt werden, bevorzugt wird aber die aus der Polymerisation stammende Lösung direkt eingesetzt. Anschließend wird das Lösungsmittel thermisch oder bevorzugt mit Hilfe von Dampf entfernt. Die Bedingungen dieses Stripp-Prozesses lassen sich leicht durch Vorversuche ermitteln.

Weiterhin bevorzugt werden die Füllstoffe zum festen erfindungsgemäßen Polybutadien oder einem Gemisch aus Kautschuken hinzugegeben und auf bekannte Weise, z.B. mit einem Kneter, eingemischt.

Die erfindungsgemäßen Kautschukmischungen enthalten gegebenenfalls weiterhin Vernetzer. Als Vernetzer können Schwefel oder Peroxide eingesetzt werden, wobei Schwefel besonders bevorzugt wird. Die erfindungsgemäßen Kautschukmischungen können weitere Kautschukhilfsprodukte enthalten, wie Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Verzögerer, Metalloxide sowie Aktivatoren wie Triethanolamin, Polyethylenglykol, Hexantriol etc. die der Gummiindustrie bekannt sind.

In den bevorzugten Kautschukmischungen mit hochaktiven gefällten Kieselsäuren ist die Verwendung von zusätzlichen Füllstoffaktivatoren besonders vorteilhaft. Bevorzugte Füllstoffaktivatoren sind schwefelhaltige Silylether, insbesondere Bis-(trialkoxisilyl-alkyl)-polysulfide, wie in DE-A-2.141.159 und DE-A-2.255.577 beschrieben, oligomere und/oder polymere schwefelhaltige Silylether der DE-A-4.435.311 und EP-A-0 670 347, Mercaptoalkyltrialkoxisilane, insbesondere Mercaptopropyltriethoxisilan und Thiocyanatoalkylsilylether, wie z.B. in DE-A-195 44 469 beschrieben.

Die Kautschukhilfsmittel werden in üblichen Mengen, die sich unter anderem nach dem Verwendungszweck richten, eingesetzt. Übliche Mengen sind z.B. Mengen von 0,1 bis 50 Gew.-%, bezogen auf Kautschuk.

Die weitere Abmischung der Kautschuke mit den anderen erwähnten Kautschukhilfsprodukten, Vernetzern und Beschleunigern kann in üblicher Weise mit Hilfe von geeigneten Mischaggregaten, wie Walzen, Innenmischer und Mischextruder, durchgeführt werden.

Die Compoundierung und Vulkanisation wird beispielsweise näher in Encyclopedia of Polymer Science and Engineering, Vol. 4, S. 66 ff (Compoundierung) und Vol. 17, S. 666 ff (Vulkanisation) beschrieben.

Die Vulkanisation der erfindungsgemäßen Kautschukmischungen kann bei üblichen Temperaturen von 100 bis 200°C, bevorzugt 130 bis 180°C (gegebenenfalls unter Druck 10 bis 200 bar), erfolgen.

Die erfindungsgemäßen Kautschukmischungen eignen sich hervorragend zur Herstellung von Formkörpern aller Art.

Nichtlimitierende Beispiele dieser Formkörper sind O-Ringe, Profile, Dichtungen, Membranen, Reifen, Reifenlaufflächen, Dämpfelemente und Schläuche.

Besonders bevorzugt werden verschiedene Reifenbauteile und Reifenlaufflächen.

Weiterhin eignen sich die erfindungsgemäßen Kautschukmischungen zur Schlagzähmodifikation von Thermoplasten, insbesondere für Polystyrol und Styrol-/Acrylnitrilcopolymere.

Für die Herstellung von schlagzähmodifizierten Formmassen, wie HIPS oder ABS, wird der erfindungsgemäße Polymer (Synonym für Polybutadien) bevorzugt zunächst in Gegenwart von vinylaromatischen Monomeren, insbesondere in Gegenwart von Styrol, alpha-Methylstyrol, alpha-Methylstyrol-Dimer, p-Methylstyrol, Divinylbenzol und/oder anderen kernsubstituierten Alkylstyrolen, bevorzugt mit 2 bis 6 C-Atomen im Alkylrest aufgelöst. Eine vinylaromatische Polymerlösung liegt nun vor.

Anschließend wird durch radikalische Polymerisation der vinylaromatischen Polymerlösung oder in Gegenwart von ethylenisch ungesätigtem Nitrilmonomer und gegebenenfalls unter Zusatz von weiteren vinylaromatischen Monomer und gegebenenfalls in Gegenwart von Lösungsmitteln nach bekannten Verfahren der Masse-, Lösungs- oder Suspensionspolymerisation in kontinuierlicher, halbkontinuierlicher oder Batch-Fahrweise der vinylaromatischen Polymerlösung eine Formmasse hergestellt.

Bevorzugt können bis zu 30 Gew.-%, besonders bevorzugt bis zu 20 Gew.-% der Gesamtmonomermenge Acrylmonomere oder Maleinsäurederivate eingesetzt werden.

Falls die radikalische Polymerisation in Lösungsmitteln durchgeführt wird, kommen als Lösungsmittel aromatische Kohlenwasserstoffe wie Toluol, Ethylbenzol, Xylole und Ketone wie Aceton, Methylethylketon, Methylpropylketone, Methylbutylketone sowie Mischungen dieser Lösungsmittel in Frage. Bevorzugt sind Ethylbenzol, Methylethylketon und Aceton, sowie deren Mischungen.

Die Polymerisation wird vorteilhaft durch Radikalstarter ausgelöst, kann aber auch thermisch ausgeführt werden; das Molekulargewicht des gebildeten Polymers kann durch Molekulargewichtsregler eingestellt werden.

Geeignete Initiatoren für die radikalische Polymerisation sind pfropfaktive, in Radikale zerfallende Peroxide

Zur Einstellung der Molekulargewichte können übliche Molekulargewichtsregler wie Mercaptane, Olefine, z. B. tert.-Dodecylmercaptan, n-Dodecylmercaptan, Cyclohexen, Terpinolen, alpha - Methylstyrol-Dimer eingesetzt werden.

Das Verfahren kann diskontinuierlich, halbkontinuierlich und kontinuierlich durchgeführt werden.

Die erfindungsgemäßen Formmassen können durch Extrudieren, Spritzgiessen, Kalandrieren, Hohlkörperblasen, Pressen und Sintern zu Formteilen thermoplastisch verarbeitet werden.

Besonders geeignet ist die Verwendung der Kautschukmischungen für Golfbälle, insbesondere Golfballkerne.

Nachstehend wird die Erfindung anhand von Beispielen näher erläutert.

### Beispiele

### Beispiel 1

### Katalysatorherstellung und Präformierung:

In ein trockenes, mit Argon inertisiertes Schlenkgefäss wurden 7,5 mL (42 mmol) Diisobutylaluminiumhydrid, 1,2 mL (12 mmol) Isopren, sowie 11,3 mL (3 mmol) einer 0,265-molaren Lösung von Neodymversatat in Hexan eingebracht. Es wurde 90 min bei 50 °C gerührt. Anschliessend wurde auf 5 °C abgekühlt und es wurden 8 mL (2 mmol) einer 0,25-molaren Lösung von Ethylaluminiumsesquichlorid in Hexan zugegeben. Die präformierte Katalysatorlösung wurde über Nacht bei Raumtemperatur stehen gelassen und dann für die Polymerisation eingesetzt.

### Polymerisation:

Ein trockener, mit Argon inertisierter 1,9 L-Glasautoklav wurde mit 580 g Hexan (über Molsieb getrocknet), 1,68 mL der oben beschriebenen präformierten Katalysatorlösung und 120 g Butadien befüllt. Es wurde auf 65 °C erwärmt und unter Rühren 90 min polymerisiert. Es wurde Umsatzprobe genommen. Der Butadienumsatz betrug nach der Polymerisation 95 %. Zur Erreichung der Standzeit wurde die Polymerlösung durch eine Wandheizung für 60 min auf 105°C erwärmt. Anschließend wurden 586 g der viskosen Lösung abgelassen, und es wurden 2 mL Methanol sowie 0,6 g Bis[3-*t*-butyl-2-hydroxy-5-methylphenyl]methan eingerührt. Danach wurde das Polymer bei 70 °C im Vakuum getrocknet. Auswaage nach dem Trocknen: 99,3 g
Mooney-Viskosität (ML 1+4 bei 100 °C): 43 MU; ML-Relax 30sec: 5,4 %
Lösungsviskosität (5,43 % in Toluol, bei Raumtemperatur): 183 mPas
Verhältnis Lösungsviskosität zu Mooney (LV / ML): 4,3

### RGM-Beziehung und Trägheitsradius (RMS):

Zur Ermittlung der RGM-Beziehung wurde das erfindungsgemäße Polybutadien mittels der AF4 eluiert und analysiert. Hinsichtlich der Probenvorbereitung und Analyse-Vorgaben wird hier auf Seite 4 und 5 der Beschreibung verwiesen.

Zunächst wird ein Trägheitsradius (RMS) des erfindungsgemäßen Polybutadiens ermittelt. Es wird hier auf die Seiten 3, 4 und 5 der Beschreibung verwiesen.

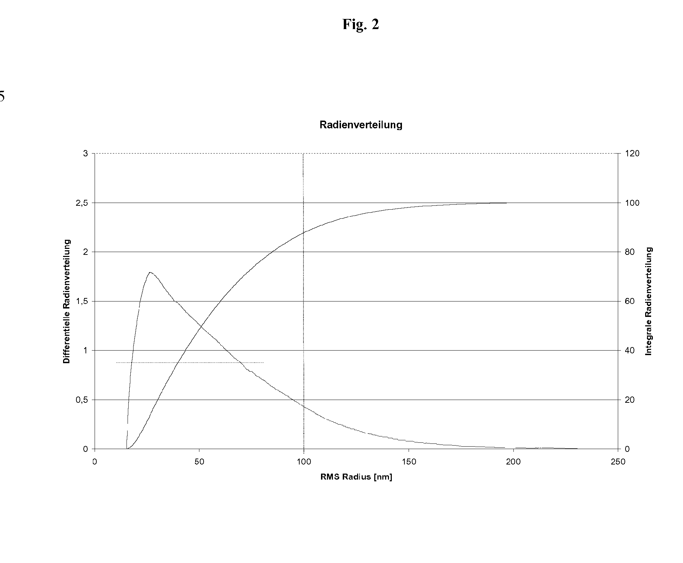

Fig. 2 zeigt die Radienverteilung des erfindungsgemäßen Polybutadiens, aufgetragen als differentielle Radienverteilung (durchgehende Linie) und als integrale Radienverteilung (gestrichelte Linie). Der integrale Radienanteil mit einem Trägheitsradius von größer 100 nm beträgt 1,4 %. Die Halbwertsbreite der Radienverteilung beträgt 29,0 nm.

Zur Berechnung des Anstiegs der RGM-Beziehung wurde der statistische Mittelwert aus jeweils 5 Zahlen gebildet, wobei die verwendeten Zahlen die beiden nächstliegenden Messwerte unterhalb und oberhalb der angegeben Molmasse und die Molmasse selbst verwendet wurden.

Der Trägheitsradius wird üblicherweise mit der Bezeichnung RMS abgekürzt. Der Anstieg der RGM-Beziehung wird in einer doppelt logarithmischen Darstellung als Anstieg des Trägheitsradius über der Molmasse berechnet. Hierfür wurde der natürliche Logarithmus der Molmasse und des Trägheitsradius RMS berechnet. Der Anstieg der RGM-Beziehung über einen speziellen Molmassenbereich ergibt sich aus dem Quotienten der Differenz der natürlichen Logarithmen von RMS an den Grenzen des betrachteten Bereiches durch die Differenz der natürlichen Logarithmen der Molmasse an den Grenzen des betrachteten Bereiches.

Tab. 1 zeigt die ermittelten Zahlenwerte auf:

**Tab. 1**

| | | | | | Anstieg RGM-Beziehung | |
|---|---|---|---|---|---|---|
| | Molmasse | In Molmasse | RMS | ln RMS | (Quotient aus Differenz In RMS durch Differenz In Molmasse) | |
| lineare polymere Hauptfraktion | 250.000 | 12,43 | 33,6 | 3,51 | | |
| | 1.000.000 | 13,82 | 69,4 | 4,24 | | |
| Differenz | | 1,39 | | 0,73 | 0,52 | RGM-Anstieg #1 |
| | | | | | | |
| Langketten- verzweigte Polymerfraktion | 1.000.000 | 1.000.000 | 69,4 | 4,24 | | |
| | 10.000.000 | 16,12 | 109,8 | 4,70 | | |
| Differenz | | 2,30 | | 0,46 | 0,20 | RGM-Anstieg #2 |

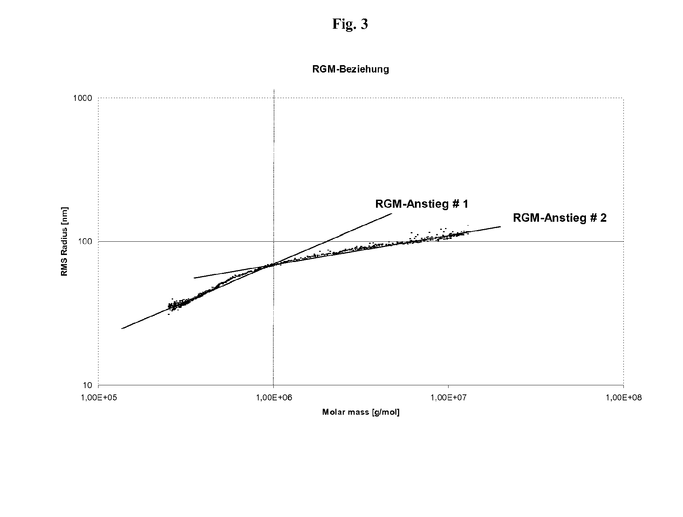

Fig. 3 zeigt eine grafische Darstellung der RGM-Beziehung des erfindungsgemäßen Polybutadiens. Deutlich zu erkennen, ist ein kleinerer Anstieg ab 1 Mio g/mol Molmasse. Das bedeutet, dass das erfindungsgemäße Polybutadien unterhalb von 1 Mio g/mol Molmasse eine lineare Struktur hat, während die darüber liegenden Molmasse eine Langkettenverzweigung aufweisen.

### Vergleichsbeispiel

### Polymerisation ohne Katalysatorpräformierung und ohne Standzeit

Ein trockener, mit Argon inertisierter 1,9 L-Glasautoklav wurde mit 8500 g Hexan (über Molsieb getrocknet), 23,0 mL einer 18,45 %igen Lösung von Diisobutylaluminiumhydrid in Hexan, 2,75 mL einer 40 %igen Lösung von Neodymversatat in Hexan, 5,1 mL einer 10 %igen Lösung von Ethylaluminiumsesquichlorid in Hexan und 1300 g Butadien befüllt. Es wurde auf 73 °C erwärmt und unter Rühren 90 min polymerisiert. Anschließend wurden 1012 g der viskosen Lösung abgelassen, und es wurden 2 mL Methanol sowie 2,5 g Bis[3-<t>butyl-2-hydroxy-5-methylphenyl]methan eingerührt. Danach wurde das Polymer bei 70 °C im Vakuum getrocknet.
Auswaage nach dem Trocknen: 129,5 g
Mooney-Viskosität (ML 1+4 bei 100 °C): 43 MU; ML-Relax 30sec: 6,2 %
Lösungsviskosität (5,43 % in Toluol, bei Raumtemperatur): 663 mPas
Verhältnis Lösungsviskosität zu Mooney (LV / ML): 15,4

### RGM-Beziehung und Radienverteilung:

Analog zu Beispiel 1 wurde auch hier die RGM-Beziehung und der Trägheitsradius des Polybutadiens des Vergleichsbeispiels ermittelt.

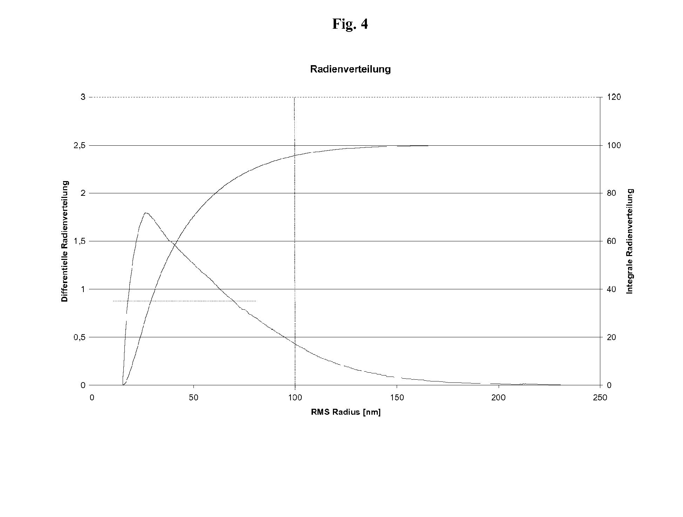

Fig. 4 zeigt die Radienverteilung des Vergleichsbeispiels, aufgetragen als differentielle Radienverteilung (durchgehende Linie) und als integrale Radienverteilung (gestrichelte Linie). Der integrale Radienanteil mit einem Trägheitsradius von größer 100 nm beträgt 12,2 %.. Die Halbwertsbreite der Radienverteilung beträgt 50,7 nm.

Zur Berechnung des Anstiegs der RGM-Beziehung wurde der statistische Mittelwert aus jeweils 5 Zahlen gebildet, wobei die verwendeten Zahlen die beiden nächstliegenden Messwerte unterhalb und oberhalb der angegeben Molmasse und die Molmasse selbst verwendet wurden.

Der Trägheitsradius wird üblicherweise mit der Bezeichnung RMS abgekürzt. Der Anstieg der RGM-Beziehung wird in einer doppelt logarithmischen Darstellung als Anstieg des Trägheitsradius über der Molmasse berechnet. Hierfür wurde der natürliche Logarithmus der Molmasse und des Trägheitsradius RMS berechnet. Der Anstieg der RGM-Beziehung über einen speziellen Molmassenbereich ergibt sich aus dem Quotienten der Differenz der natürlichen Logarithmen von RMS an den Grenzen des betrachteten Bereiches durch die Differenz der natürlichen Logarithmen der Molmasse an den Grenzen des betrachteten Bereiches.

Tab. 2 zeigt die ermittelten Zahlenwerte auf.

**Tab. 2**

| | | | | | Anstieg RGM-Beziehung | |
|---|---|---|---|---|---|---|
| | Molmasse | In Molmasse | RMS | In RMS | (Quotient aus Differenz In RMS durch Differenz In Molmasse) | |
| lineare polymere Hauptfraktion | 250000 | 12,43 | 34,2 | 3,53 | | |
| | 1000000 | 13,82 | 68,9 | 4,23 | | |
| Differenz | | 1,39 | | 0,70 | 0,51 | RGM-Anstieg #1 |
| | | | | | | |
| Langketten- verzweigte Polymerfraktion | 1000000 | 13,82 | 68,9 | 4,23 | | |
| | 10000000 | 16,12 | 193,5 | 5,27 | | |
| Differenz | | 2,30 | | 1,03 | 0,45 | RGM-Anstieg #2 |

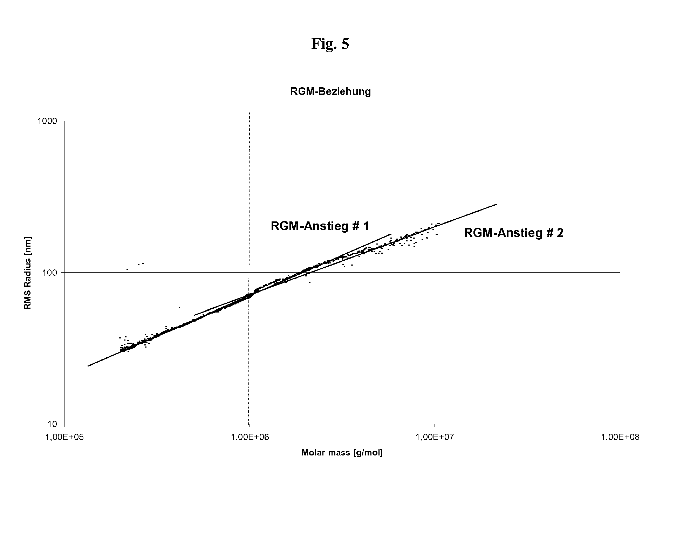

Fig. 5 zeigt eine grafische Darstellung der RGM-Beziehung des Vergleich-Polybutadiens. Deutlich zu erkennen, ist ein Anstieg ab 1 Mio g/mol Molmasse annähernd identisch ist mit dem Anstieg bis 1 Mio g/mol Molmasse. Das bedeutet, dass das Vergleich-Polybutadien gänzlich eine lineare Struktur aufweist.

## Patentansprüche

1. Hochmolekulares, bimodales Neodym-katalysiertes Polybutadien mit einem hohen Anteil an cis-1,4-Einheiten von > 95 % und einem geringen Anteil an 1,2-Vinyl-Gehalt von < 1 %, **dadurch gekennzeichnet, dass** das Polybutadien eine lineare polymere Hauptfraktion und eine langkettenverzweigte Polymerfraktion aufweist, wobei die polymere Hauptfraktion einen Anstieg von > 0,5 und die langkettenverzweigte Polymerfraktion einen Anstieg von < 0,3 in der RGM-Beziehung aufweist.

2. Polybutadien nach Anspruch 1, **dadurch gekennzeichnet, dass** die Fraktionen mittels der asymmetrischen Fluss-Feld-Fluss-Fraktionierung (AF4) eluiert werden.

3. Polybutadien nach Anspruch 2, **dadurch gekennzeichnet, dass** deren Anteil mit einem Trägheitsradius von über 100 nm < 15 % beträgt, bevorzugt < 10%, besonders bevorzugt < 5% aufweist.

4. Polybutadien nach Anspruch 3, **dadurch gekennzeichnet, dass** eine Trägheits-Radienverteilungsbreite des Polybutadiens bei < 45 nm, bevorzugt < 40 nm, besonders bevorzugt < 35 nm liegt.

5. Verfahren zur Herstellung von bimodalen Neodym-katalysierten Polybutadienen gemäß einem der vorstehenden Patentansprüche, umfassend folgende Verfahrensschritte:
1) Modifizierte Katalysatorenherstellung mit Präformierung unter Verwendung von Katalysatorsystemen basierend auf Neodym bestehend aus
Komponente A: einem Alkoholat, einem Phoshponat, Phosphinate und/oder Phosphate, einem Carboxylat, einer Komplexverbindung der Seltenen Erdmetalle mit Diketonen und/oder einer Additionsverbindung der Halogenide der Seltenen Erdmetalle mit einer Sauerstoff- oder Stickstoff-Donatorverbindung, vorzugsweise Neodymversatat,
Komponente B: einem Dialkylaluminiumhydrid, vorzugsweise Diisobutylaluminiumhydrid (DIBAH),
Komponente C: einem Dien, vorzugsweise Butadien oder Isopren und
Komponente D: von wenigstens einer Organometallhalognide, vorzugsweise Ethylaluminiumsesquichlorid (EASC),
wobei zunächst in einem ersten Schritt die Komponenten A, B, und C und bei einer Temperatur von -20°C bis 80°C, bevorzugt von 0°C bis 40°C für einen Zeitraum von 5 Minuten bis 10 Stunden, bevorzugt von 10 Minuten bis 2 Stunden vermischt und die Mischung dann vor der Zugabe von Komponente D auf kleiner -10°C, bevorzugt auf kleiner -30°C abgekühlt wird;
2) optional Präformierung des modifizierten Katalysatorsystems bei einer Temperatur von -30°C bis 80 C, bevorzugt von 5°C bis 50°C für die Dauer von 10 Minuten bis 250 Stunden, vorzugsweise von 20 Minuten bis 100 Stunden;
3) Polymerisation der Monomere bei einer Temperatur zwischen -20 und 100°C,
4) anschließend wird die Polymerisationslösung gegen Ende, nämlich bei einem Umsatz von ≥ 85 **Gew.-%,** bevorzugt ≥90 **Gew.-%,** und besonders bevorzugt ≥95 **Gew.-%,** Butadien, bei einer Temperatur von ≥ 100°C, bevorzugt 100°C bis 140°C, besonders bevorzugt 100°C bis 125°C für 10 bis 120 Min, bevorzugt für 15 bis 60 min gehalten.

6. Verfahren nach Anspruch 5, **dadurch gekennzeichnet, dass** die Herstellung des Katalysatorsystems optional mit einem Aluminiumtrialkyl, vorzugsweise Tributylaluminium, eingesetzt werden kann.

7. Verfahren nach Anspruch 5 oder 6, **dadurch gekennzeichnet, dass** am Ende der Polymerisation die Temperatur der Standzeit von 90°C bis 110°C, bevorzugt von 95°C bis 100°C gehalten wird.

8. Kautschukmischungen enthaltend ein Polybutadien gemäß Anspruch 4.

9. Verwendung der Kautschukmischungen gemäß Anspruch 8 zur Herstellung von Formkörpern aller Art.

10. Verwendung der Kautschukmischungen gemäß Anspruch 9, **dadurch gekennzeichnet, dass** der Formkörper ein Reifenbauteil ist.

11. Verwendung der Kautschukmischungen gemäß Anspruch 8 für die Schlagzähmodifikation von Thermoplasten.

12. Verwendung der Kautschukmischungen gemäß Anspruch 8 für Polystyrol und Styrol/Acrylnitril-Copolymere.

13. Verwendung der Kautschukmischungen gemäß Anspruch 8 für Golfbälle.
